# EUROPEAN PATENT SPECIFICATION

(11) **EP 3 144 267 B1**
(45) Date of publication and mention of the grant of the patent: **09.05.2018**
(21) Application number: 16187547.1
(22) Date of filing: 07.09.2016
(51) Int. Cl.: B66F 9/12, B66F 11/04, E04G 5/14, E05D 3/00

(54) **A LOADING PLATFORM**
LADEPLATFORM
PLATE-FORME DE CHARGEMENT

(30) Priority: 17.09.2015 IT UB20153698
(43) Date of publication of application: 22.03.2017
(73) Proprietor: Manitou Italia S.r.l., 41013 Castelfranco Emilia (Modena) (IT)
(72) Inventor: IOTTI, Marco, 42124 REGGIO EMILIA (IT)
(74) Representative: Gagliardelli, Fabrizio

(56) References cited:
- WO-A1-95/22502
- WO-A1-2008/105190
- WO-A1-2009/037429
- WO-A1-2012/075536
- CN-U- 201 896 021
- US-A1- 2006 225 955
- US-A1- 2009 096 231
- US-A1- 2011 179 977

## Description

The invention has for object a loading platform for telescopic handlers or the like.

The loading platforms of the known type comprise a bottom plane arranged for supporting operators and equipment, around which bottom plane there are disposed walls, i.e. sidewalls, having the function of preventing operators, or the equipment lying on the bottom plane, from accidentally falling onto the ground.

The loading platforms are predisposed for being connected to a telescopic lifting arm via coupling devices.

The telescopic handlers loading platforms are made with high resistant metallic materials such as iron and steel both for the sake of low-cost constructive reasons and for safety reasons, which implies avoiding even the smallest risk of a platform collapsing which may affect the safety of the operators or cause the equipment to fall onto the ground.

For same reasons the different components of the platform, in particular the bottom plane structure and the sidewalls, are secured one to another by rivets and welds, thereby defining a substantially monolithic unit.

However, these devices are not devoid of drawbacks.

Indeed, the known platforms for telescopic handlers are very heavy, which limits either the height at which they can be brought and, above all, the "working radius" permitted, i.e. the horizontal extension of the support arm to which the platform itself is attached.

Furthermore, the international shipping costs of the known platforms are particularly high due to the fact that there exists a considerable imbalance between the amount of material needed for producing the platforms if compared to the very bulky dimensions thereof; in fact, for the shipment purpose, the loading platforms are to be regarded as large empty containers.

Document US 2009/0096231 A1 discloses a loading platform comprising the features of the preamble of claim 1. Thus the technical task underlying the present invention is to propose a loading platform which overcomes the drawbacks of the prior art.

This technical task is attained by the loading platform made according to claim 1.

Further characteristics and advantages of the present invention will become more apparent from the indicative, and therefore non-limiting description of preferred but non-exclusive embodiments of the inventive loading platform, as illustrated in the accompanying drawings wherein:
- Figure 1 is an axonometric view of at least a part of the loading platform of the invention;
- Figure 2 is an exploded view of the loading platform portion of figure 1;
- Figure 3 is an exploded view of a loading platform sidewall;
- Figure 4 is an enlarged detail of the previous figure;
- Figure 5 is an isometric cutaway view of a possible embodiment of the bottom plane of the loading platform;
- Figure 6 is an exploded view of the plane of Figure 5;
- Figure 7 shows a bottom edge of the loading platform; and
- Figure 8 is a rear isometric view of a loading structure comprising the inventive platform.

With reference to the above figures, the numeral 1 indicates a loading platform for telescopic handlers or the like.

The loading platform 1 of the invention is intended to be connected to a telescopic lifting arm.

The loading platform 1 herein disclosed, first of all comprises a bottom plane 2 that is arranged for the support of operators and/or work equipment.

The plane 2 is associated to sidewalls 3, 4 having the purpose of avoiding accidental falls of the operators or equipment.

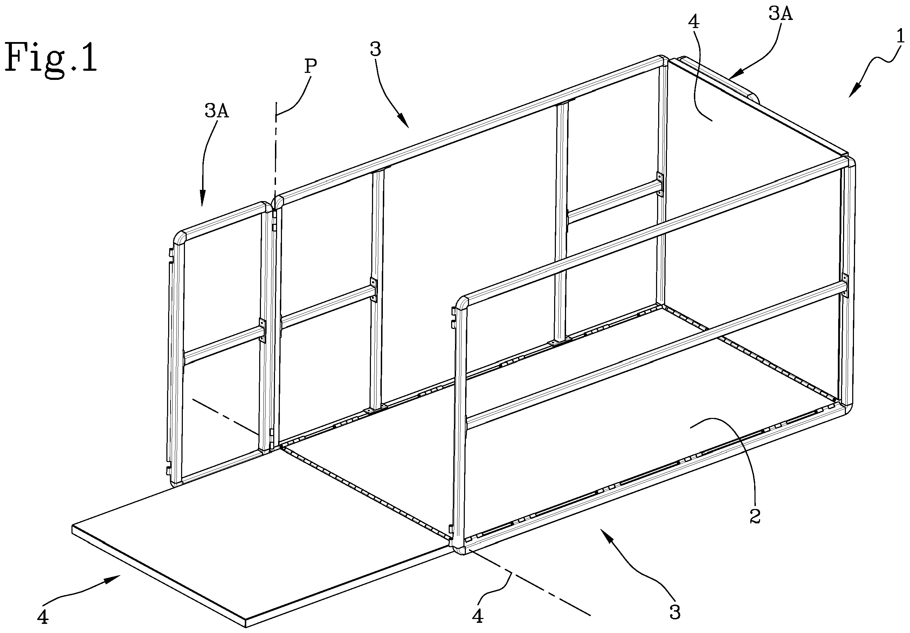

In particular, the plane 2 is preferably quadrangular-shaped (i.e. rectangular-shaped) and therefore the sidewalls 3, 4 are placed at the perimeter of the plane 2, wherefrom the sidewalls 3, 4 are arising thus defining a sort of cage that is open superiorly (see, for example figure 1).

In the preferred embodiment of the invention depicted in the figures, the plane 2 is surrounded by truss sidewalls 3 (or with "latticework structure") and solid sidewalls 4.

The truss sidewalls 3 are preferably arranged on the long sides, while the solid sidewalls 4, that will form the walking surface when the loading platform 1 is extended, are preferably arranged on the short sides, thereby defining the longitudinal ends of the loading platform 1.

According to an important aspect of the invention, the plane 2 and the sidewalls 3, 4 include respective first hinge means 221, 31 in order that the sidewalls may be removably secured to the plane 2, thus defining a mountable and demountable loading platform 1.

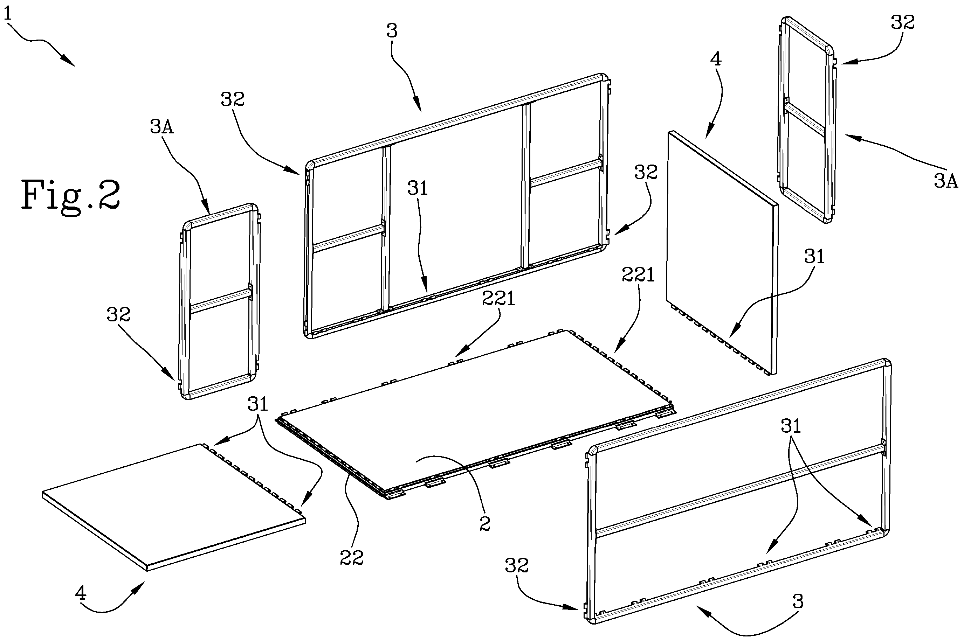

In addition, the sidewalls 3, 4 are provided with respective second hinge means 32 in order to removably secure the various sidewalls 3, 4 to one another. According to the invention and as depicted in the attached figures, the first and second means 31, 32, 221 are hinge means (see in particular Figures 2, 3 and 4).

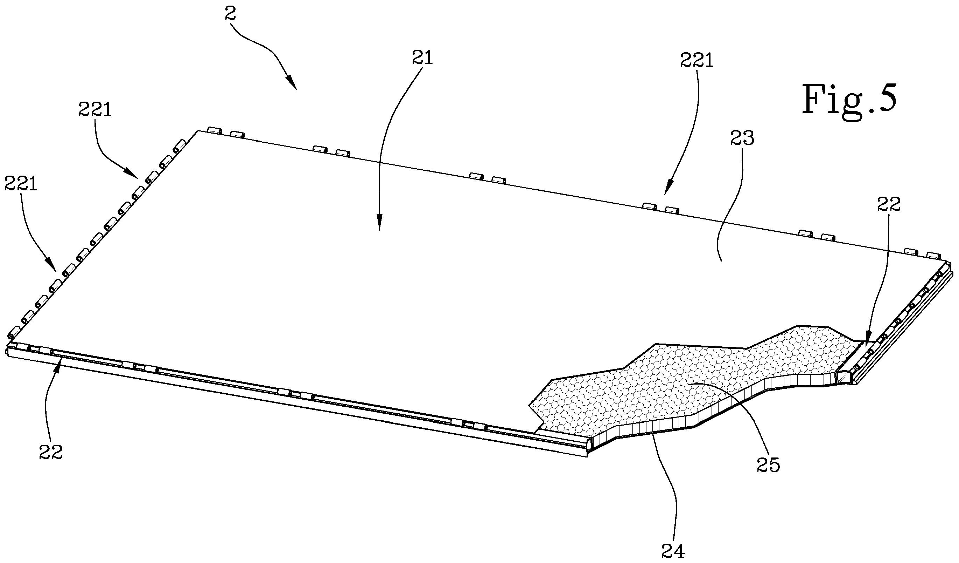

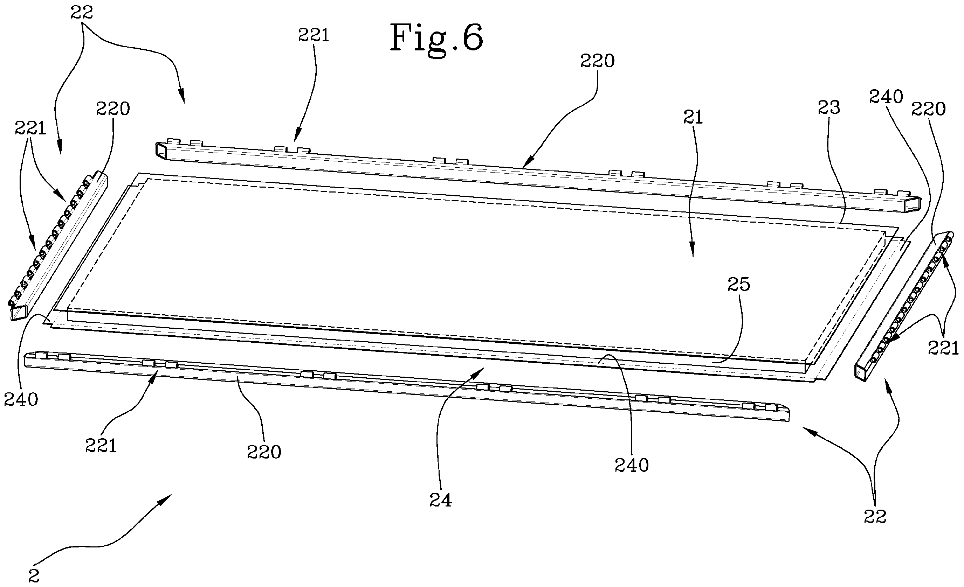

As can be seen in Figures 5 and 6, the bottom plane 2 of the invention may comprise an internal panel 21 and a frame 22 coupled to the panel 21 and provided with first means 221; the coupling mode will be discussed in a later section, where the structure of the plane 2 and the materials the latter is made of, are being disclosed.

In practice, this frame 22 is arranged substantially at the perimeter of the internal panel 21.

The aforementioned frame 22 can be formed by a plurality of profiles 220, for example one on each side of the panel 21, on each of which there are obtained articulation eyelets 221 of the first means (in the manner of "hinges"), preferably via machining (see in detail figures 5 and 6).

As can be appreciated from the figures, the frame 22 bears the eyelets 221 of the first means at a top portion thereof, which means that the hinges are protruding upwards.

In detail, each section 220 of the frame 22 may be provided with more eyelets 221 distributed along its length.

The solid sidewalls 4, arranged at the ends of the loading platform 1, comprise the same components of the bottom plane 2 but are provided with a frame 22 that is devoid of one or more of the profiles 220 at the sides or edges thereof.

In order to become hinged to the bottom plane 2, in the embodiment shown in the figures, the solid sidewalls 4 are provided with only one profile 220.

The above mentioned truss sidewalls 3 consist of a plurality of profiles 33, which are joined to one another in addition to being joined to the bottom plane 2, thereby defining said truss configuration.

The truss sidewalls 3 comprise interlocking means 34, 35 in order that the profiles 33 can be removably secured to one another thereby defining a mountable and demountable sidewall 3.

The configuration of the truss sidewalls 3 is such as to permit a modularity of the sidewalls 3 due to which modular sidewalls 3 are obtained, which are adaptable for example to the length of the bottom plane 2.

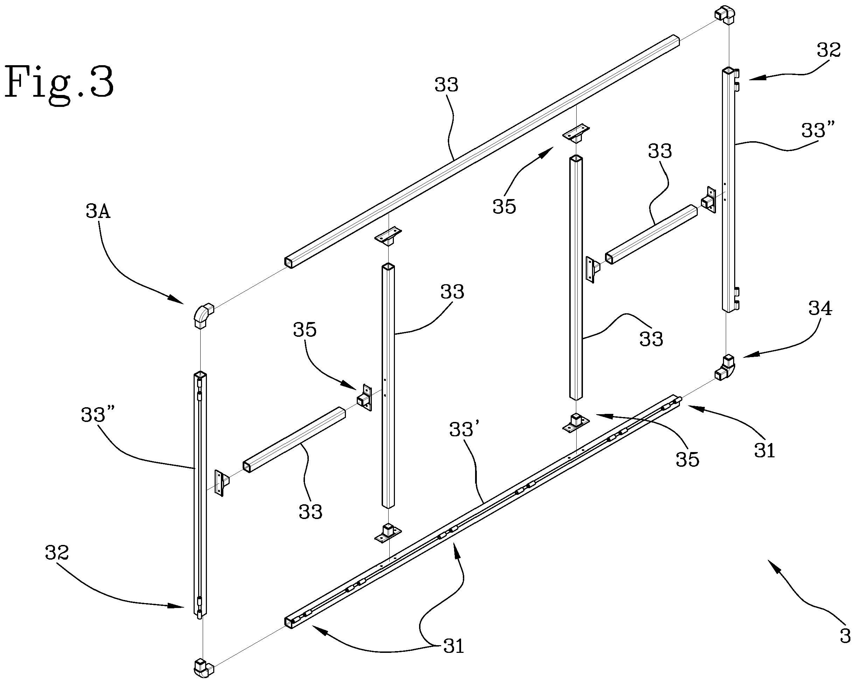

In detail, the truss sidewalls 3 may include lower profiles 33', one on each side of the plane 2, which profiles 33' are provided with the above-mentioned first means 31 (see figure 3).

In addition, these lower profiles 33' may be obtained via a processing not dissimilar to that applied to the profiles 220 of the frame 22 and may include several eyelets 31 distributed on the respective length and arranged to be coupled with those of the profiles 220 of the frame 22, with suitable pins or rods (not illustrated), being inserted therein.

The same solution, i.e. use of articulation eyelets 32, is preferably also applied in order to join a sidewall 3, to the other one 4, e.g. a truss sidewall 3 to a solid sidewall 4 as visible in Figures 1, 2, 7 and 8.

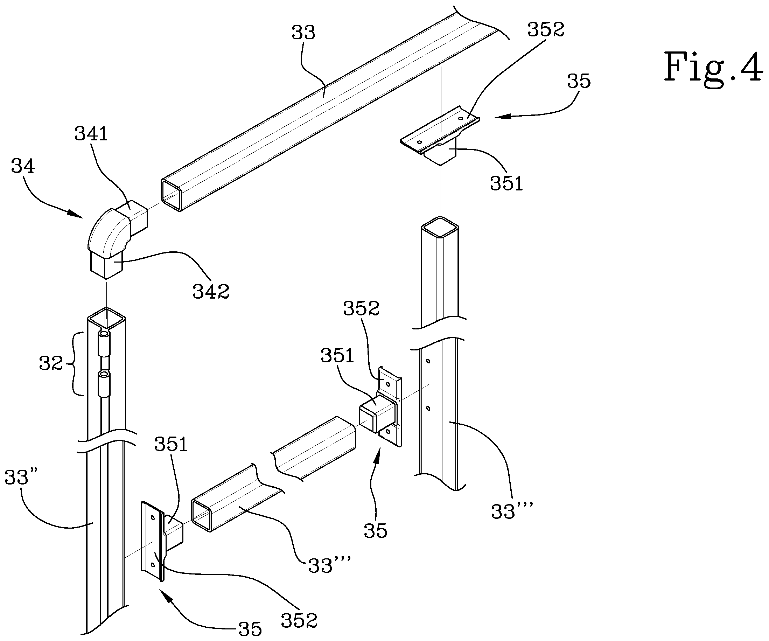

In this case, the truss sidewalls 3 are provided with lateral profiles 33" in turn provided with eyelets 32, which profiles 33" are structurally not dissimilar from the lower ones, although preferably shorter (see Figures 3 and 4).

As shown in Figures 3 and 4, said third means preferably comprise a plurality of angular elements 34, each adapted to connect respective ends of two profiles 33 that are arranged transversally in the corresponding side 3, thus defining the perimeter of the same.

In this case, each angular element 34 comprises two connecting members 341, 342, adapted to be inserted into respective profiles 33 in an interlocking manner at the ends thereof.

Such connecting members 341, 342 may be constituted by basically prismatic protrusions being respectively angled, preferably at 90°. In the preferred embodiment of the invention, the third means comprises a plurality of central elements 35, each adapted to be removably secured to a first profile 33 at a point of the length of the latter.

Each central element 35 includes a connecting member 351 adapted to be inserted in an interlocking manner, into the end of a second profile 33 that is disposed transverse to the first profile 33, internally of the respective sidewall 3.

In other words, particularly the profiles 33'" (depicted in Figure 4), arranged internally of the sidewall, are connected together or to external profiles (i.e. the perimeter profile) by way of these substantially T-shaped central elements.

The central elements 35 may have a flat base 352 that can be fixed in a removable manner on a side of an outer profile 33 (or 33" in the case of lateral profiles), and a preferably prismatic protrusion 351 that slips into the horizontal profile 33'''.

In practice, the loading platform 1 of the invention is completely mountable and demountable and is largely modular, in the sense that the same components may be used for realizing differently sized loading platforms 1.

It should be appreciated that all the profiles 33, 220 previously described may be equal to each other at less than the length and with variable number and positions of the first hinge means 31, 32, 221.

Thus, the proposed separable and reassemblable loading platform 1 can be realized with the following four basic standard parts: the structure of the central panel 21 of the bottom plane 2 (used also for the solid sidewall 4), the "single" profile 220, 33, the angular element 34 and the central element 35.

With extremely contained costs, a loading platform 1 may be obtained that can be taken apart and put into a transport container where it occupies a very little space, and then be reassembled with ease once delivered at the destination.

According to a very important aspect of the invention, at least the bottom plane 2 and the sidewalls 3, 4 are made of aluminum and/or an aluminum containing product and a material at most as heavy as the aluminum (and preferably lighter).

In other terms, the truss sidewalls 3 may include aluminum profiles 33, joined together by aluminum elements 34, 35 included in the third means defined above.

For what concerns the bottom plane 2, the same is preferably formed by a sandwich panel 21, which comprises two aluminum outer plates 23, 24 (or "skins") between which a layer 25 (or "core") is interposed that is made of an alveolar polymer for example polypropylene, PVC, polycarbonate, etc. (see figures 5 and 6).

By way of a per se known process, but not in combination with the other characteristics of the invention, a panel 21 is obtained which is formed by two parallel aluminum skins 23, 24 inextricably fixed by a polymeric core 25, thereby defining an almost monolithic artefact for practical purposes, and extremely lightweight.

In practice, the panel 21 thus formed allows high performance in terms of structural strength while being much lighter than prior art panels. According to an alternative embodiment, not depicted, the said sandwich aluminum panel provided with skins 23, 24 comprises, in the place of the alveolar polymeric core, an internal structure defined by a plurality of aluminum tubular components.

Even in this case, it is present the above frame 22.

Note that, regardless of the choice of the material and core structure, the panel 21 may optionally comprise a non-slip surface provided on the upper skin 23.

According to a preferred constructive aspect, the frame 22 mentioned above is housed within a perimeter cavity to the panel 21 defined by one of the aluminum plates 23, 24.

In practice, the central panel 21 can be preliminarily made with a bottom skin 24 which includes extensions 240, or wings, at the sides thereof; in this way, after fitting the profiles 220 of the frame 22 at the perimeter, the wings 240 are folded upwards, thus encompassing the frame 22 within the bottom plane 2 (see Figure 6).

Being extremely lightweight, the loading platform 1 realized in the manner explained above, allows for a greater "working radius" during lifting by part of the telescopic arm and allows a much smoother and economic delivery once disassembled and loaded in the container.

An alternative embodiment is however not to be excluded, based on which the panel core is made of (alveolar) aluminum or any other type of non-polymeric material.

Furthermore, according to a non-preferential and non-illustrated version of the invention, there is provided use of a plurality of profiles adapted to fit together sequentially two by two along an ideal plane, thereby defining the bottom plane of the loading platform.

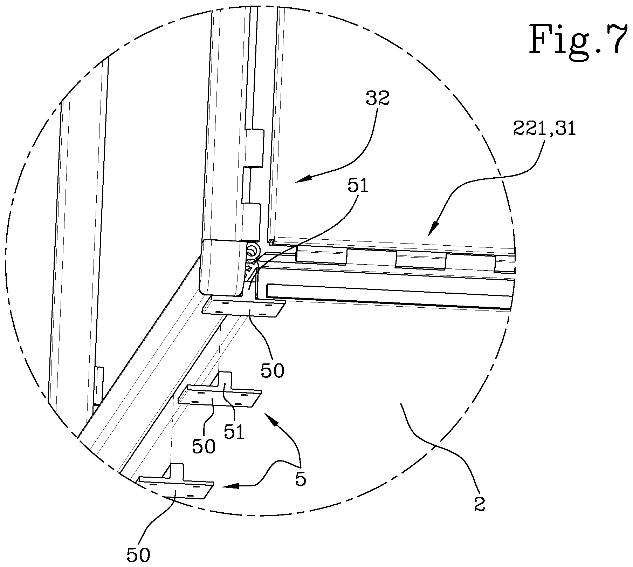

According to an optional but advantageous aspect of the invention shown in Figure 7, the loading platform 1 can be provided with stabilizer elements 5 provided with a bracket 51 insertable between the bottom plane 2 and the sidewalls 33, 34, in a position substantially coplanar to the hinge 221, 31 joining them.

In detail, these stabilizers 5 are particularly devised for being secured in a removable manner below the loading platform 1, at the junction area between the sidewalls 3, 4 and the bottom plane 2, where there is defined a rectilinear recess running along the length of the corresponding side of the loading platform 1.

The aforementioned bracket 51 is shaped to fit to size in such rectilinear recess, thus substantially eliminating the clearance between the sidewalls 3, 4 and the bottom plane 2 due to the fact that they are joined by means of hinges.

In detail, each stabilizer 5 can be made of an aluminum or plastic material, be T-shaped and comprise a base plate 50 which is removably fixable to both the respective sidewall 3, 4 and the bottom plane 2, from which base 50 the aforementioned bracket is standing 51.

For each sidewall 3, 4, several stabilizers can be applied 5, which ensure annulment of said clearance.

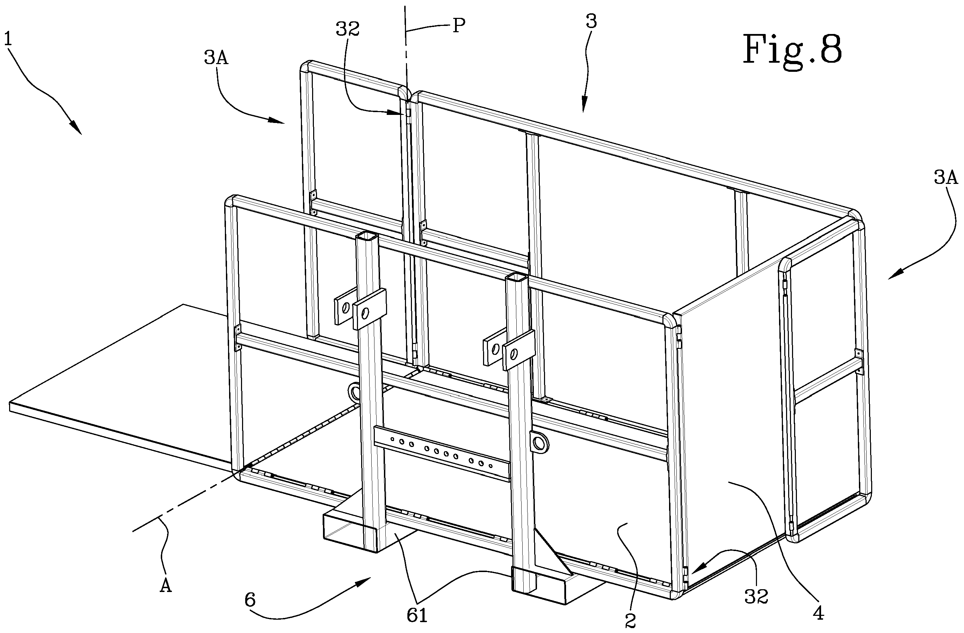

As depicted in Figure 8, the invention may provide a coupling device 6 that can be secured in a removable manner to the loading platform 1, which coupling device 6 is adapted to be connected directly to the arm of a telescopic handler, thereby defining a complete loading structure 1.

Between the coupling device 6 and the lift arm there is interposed an equipment, not shown, which in the prior art is termed "fixed attachment" or "rotation"; unlike the coupling device 6, such equipment, permits to the loading platform 1 to be oriented according to the needs arising from the operations to be carried out.

Such coupling device 6 is preferably positioned at a sidewall 3 of the loading platform 1, in a central position with respect to the same and is adapted to support the loading platform 1 and load thereof by means of a pair of support sections 61 fixed under the bottom of the loading platform 1.

The coupling device 6 in question may be constituted by a truss structure of profiles made up of iron, aluminum or any other material suitable for the purpose.

In the attached figures, the loading platform 1 is shown with an open end not only to emphasize its modularity, which has been discussed previously, but also to illustrate the extensibility thereof.

In fact, preferably, the two end sidewalls 4 of the invention are solid sidewalls, and once released from the lateral truss sidewalls 3, they can rotate about a horizontal axis A and coplanar to the bottom plane 2, between a retracted position, wherein the sidewalls are vertically positioned, and an extended position, wherein the sidewalls are aligned to the bottom plane 2 thereby extending the bottom plane 2 of the loading platform 1.

Preferably, the loading platform 1 further includes one or more truss sidewall portions 3A realized constructively as the truss sidewalls 3 described above.

Such sidewall portions 3A are hinged to respective sidewalls 3 at corresponding profiles 33 arranged at opposite longitudinal ends of the loading platform 1; these portions 3A are functionally associated with the solid sidewalls 4 and the lateral sidewalls 3 in a manner explained below.

Once tilted the solid sidewalls 4 in the extended position thereof, the sidewall portions 3A become rotatable about an axis P perpendicular to the bottom plane 2 and passing through the hinge by which the sidewall portions 3A are connected to the lateral sidewalls 3 between a retracted position, wherein the portions 3A are proximate to the respective solid sidewalls 4, and an extended position, wherein the portions 3A are arranged aligned to the solid sidewalls 4, thereby defining extensions thereof.

Hence, the inventive loading platform 1 is capable of extending and retracting at least in the longitudinal direction.

By the disclosure of the invention set forth above, it is clear how the loading platform 1 herein proposed is able to overcome all the drawbacks exhibited by the loading platforms of the known type consisting of steel components welded to one another as already mentioned.

In fact, although on the one hand the cost of production of known loading platforms is not particularly high, on the other hand their foreign shipment is extremely costly for the reasons already explained above.

The invention provides instead a completely dismantlable and reassemblable loading platform 1 that can be placed on a transport container where it occupies very little space, for then being re-assembled with ease once delivered to the destination.

Moreover, production costs of the inventive loading platform 1 are extremely low in that, as explained above, the dismantlable and reassemblable loading platform 1 proposed herein, can be realized using a few standard basic pieces i.e.: the structure of the central panel 21 of the bottom plane 2, which is also used for the solid sidewall 4, the profile 220, 33, the angular element 34 and the central element 35.

Finally, because the loading platform 1 provided herein is realized based on the special aluminum configuration illustrated above, it exhibits great structural strenght while being much lighter than the known loading platforms, thus allowing to reach in complete safety a working radius major than that of the lifting arm whereon the same is mounted.

## Claims

1. A loading platform (1) for telescopic handlers or other similar machines, comprising at least a bottom plane (2) provided for supporting operators and/or equipment and associated with sidewalls (3, 4), wherein said bottom plane (2) and said sidewalls (3,4) include respective first interlocking and/or hinge means (31, 221) such that the sidewalls (3, 4) can be removably secured to the bottom plane (2), thereby defining a mountable and demountable platform(1);
wherein said sidewalls (3, 4) comprise respective second interlocking and/or hinge means (32) for fixing removably the different sidewalls one to another; wherein the platform comprises truss sidewalls (3) each comprising a plurality of profiles (33) and at least third interlocking and/or hinge means (34, 35) in order to secure the profiles one to another in a removable manner, thus defining mountable and demountable sidewalls (3),
**characterised in that** said first and second means (31, 221, 32) are of the hinge type and said third means (34, 35) are of the interlocking type.

2. A platform (1) according to claim 1, wherein the bottom plane (2) comprises an internal panel (21) and a frame (22) coupled to the panel (21), wherein the frame (22) is provided with said first means (221).

3. A platform (1) according to at least one of the preceding claims, in which at least the bottom plane (2) and the sidewalls (3, 4) are made of aluminum and/or of a product consisting of aluminum and of a material which is at most as heavy as aluminum.

4. A platform (1) according to the preceding claim, wherein at least the bottom plane (2) includes a layer of alveolar aluminum.

5. A platform (1) according to claim 3 or claim 4, wherein at least the bottom plane (2) comprises a layer (25) made of alveolar polymer.

6. A platform (1) according to claims 3 to 5, wherein at least the bottom plane (2) includes a sandwich panel (21) which comprises two aluminum plates (23, 24) between which said layer (25) is interposed.

7. A platform (1) according to the preceding claim and claim 2, wherein said frame (22) is housed within a perimeter cavity defined by one of said aluminum plates (24) of the panel (21).

8. A platform (1) according to at least one of claims 3 to 7, comprising a plurality of profiles adapted to interlock together two by two, thereby forming said bottom plane.

9. A platform (1) according to at least one claims 2 to 8, comprising at least one solid sidewall (4) obtained as the bottom plane (2).

10. A platform (1) according to any of the preceding claims, wherein said third means comprises a plurality of angular elements (34), each adapted to connect respective ends of two profiles (33), which are arranged transversally within the respective sidewall (3), each angular element comprising at least two connecting members (341, 342) adapted to be inserted into respective profiles in an interlocking manner.

11. A platform (1) according to claim 1, wherein said third means comprises a plurality of central elements (35), each of which is suitable for being secured in a removable manner to a first profile (33) and comprising at least one connecting member (351) adapted to be inserted, in an interlocking manner, into the end of a second profile (33), which is arranged transverse to the first profile.

12. A loading structure comprising a platform (1) according to at least one of the preceding claims and a coupling device (6) being secured in a removable manner to the platform (1), which coupling device (6) is suitable for being connected directly to the arm of a telescopic handler or similar machines.

## Patentansprüche

1. Ladeplattform (1) für Teleskoplader oder sonstige ähnliche Maschinen, umfassend mindestens eine Bodenebene (2), die bereitgestellt ist, um Arbeitskräfte und/oder Geräte zu tragen und die mit Seitenwänden (3, 4) assoziiert ist, wobei die Bodenebene (2) und die Seitenwände (3, 4) jeweilige erste Verriegelungs- und/oder Gelenkverbindungsmittel (31, 221) umfassen, sodass die Seitenwände (3, 4) entfernbar an der Bodenebene (2) gesichert werden können, wodurch eine montierbare und demontierbare Plattform (1) definiert wird,
wobei die Seitenwände (3, 4) jeweilige zweite Verriegelungs- und/oder Gelenkverbindungsmittel (32) umfassen, um die verschiedenen Seitenwände entfernbar miteinander zu fixieren,
wobei die Plattform Auslegerseitenwände (3) umfasst, die jeweils eine Vielzahl an Profilen (33) umfassen, und mindestens dritte Verriegelungs- und/oder Gelenkverbindungsmittel (34, 35), um die Profile auf entfernbare Weise aneinander zu sichern, wodurch montierbare und demontierbare Seitenwände (3) definiert werden,
**dadurch gekennzeichnet, dass** die ersten und zweiten Mittel (31, 221, 32) vom Gelenkverbindungstyp und die dritten Mittel (34, 35) vom Verriegelungstyp sind.

2. Plattform (1) nach Anspruch 1, wobei die Bodenebene (2) ein internes Paneel (21) und einen Rahmen (22), der mit dem Paneel (21) gekuppelt ist, umfasst, wobei der Rahmen (22) mit den ersten Mitteln (221) versehen ist.

3. Plattform (1) nach einem der vorhergehenden Ansprüche, wobei zumindest die Bodenebene (2) und die Seitenwände (3, 4) aus Aluminium und/oder einem Produkt gefertigt sind, das aus Aluminium und einem Material besteht, das höchstens so schwer wie Aluminium ist.

4. Plattform (1) nach dem vorhergehenden Anspruch, wobei mindestens die Bodenebene (2) eine Schicht aus Aluminiumwaben einschließt.

5. Plattform (1) nach Anspruch 3 oder Anspruch 4, wobei mindestens die Bodenebene (2) eine Schicht (25) aus Polymerwaben umfasst.

6. Plattform (1) nach den Ansprüchen 3 bis 5, wobei mindestens die Bodenebene (2) ein Sandwichpaneel (21) umfasst, das zwei Aluminiumplatten (23, 24) umfasst, zwischen denen die Schicht (25) eingesetzt ist.

7. Plattform (1) nach dem vorhergehenden Anspruch und Anspruch 2, wobei der Rahmen (22) in einem umfangseitigen Hohlraum untergebracht ist, der durch eine der Aluminiumplatten (24) des Paneels (21) definiert ist.

8. Plattform (1) nach mindestens einem der Ansprüche 3 bis 7, umfassend eine Vielzahl an Profilen, die ausgelegt sind, um jeweils paarweise miteinander verriegelt zu werden, wodurch die Bodenebene gebildet wird.

9. Plattform (1) nach mindestens einem der Ansprüche 2 bis 8, umfassend mindestens eine feste Seitenwand (4), die als Bodenebene (2) ausgebildet ist.

10. Plattform (1) nach einem der vorhergehenden Ansprüche, wobei die dritten Mittel eine Vielzahl an Winkelelementen (34) umfassen, von denen ein jedes ausgelegt ist, um jeweilige Enden von zwei Profilen (33) zu verbinden, die quer innerhalb der jeweiligen Seitenwand (3) angeordnet sind, wobei ein jedes Winkelelement mindestens zwei Verbindungsglieder (341, 342) umfasst, die ausgelegt sind, um in jeweilige Profile auf verriegelnde Weise eingefügt zu werden.

11. Plattform (1) nach Anspruch 1, wobei die dritten Mittel eine Vielzahl mittiger Elemente (35) umfassen, von denen ein jedes geeignet ist, um auf entfernbare Weise an einem ersten Profil (33) gesichert zu werden, und umfassend mindestens ein Verbindungsglied (351), das ausgelegt ist, um auf verriegelnde Weise in das Ende eines zweiten Profils (33) eingefügt zu werden, das quer zum ersten Profil angeordnet ist.

12. Ladestruktur, umfassend eine Plattform (1) nach mindestens einem der vorhergehenden Ansprüche und eine Kupplungsvorrichtung (6), die auf entfernbare Weise an der Plattform (1) gesichert ist, wobei die Kupplungsvorrichtung (6) geeignet ist, um direkt mit dem Arm eines Teleskopladers oder ähnlicher Maschinen verbunden zu werden.

## Revendications

1. Plate-forme de chargement (1) pour manipulateurs télescopiques ou autres machines similaires, comprenant au moins une surface de fond (2) pour le support d'opérateurs et/ou d'équipements et associée à des cloisons latérales (3, 4), dans laquelle ladite surface de fond (2) et lesdites cloisons latérales (3, 4) incluent des premiers moyens à encastrement et/ou à charnière (31, 221) respectifs, de sorte que les cloisons latérales (3, 4) puissent être fixées de façon amovible à la surface de fond (2), définissant ainsi une plate-forme montable et démontable (1) ;
dans laquelle lesdites cloisons latérales (3, 4) comprennent des seconds moyens à encastrement et/ou à charnière (32) respectifs pour fixer de façon amovible les différentes cloisons latérales les unes aux autres ;
dans laquelle la plate-forme comprend des cloisons latérales à treillis (3), comprenant chacune une pluralité de profilés (33) et au moins des troisièmes moyens à encastrement et/ou à charnière (34, 35), de sorte à fixer les profilés les uns aux autres d'une façon amovible, définissant ainsi des cloisons latérales montables et démontables (3),
**caractérisée en ce que** lesdits premiers et seconds moyens (31, 221, 32) sont du type à charnière et lesdits troisièmes moyens (34, 35) sont du type à encastrement.

2. Plate-forme (1) selon la revendication 1, dans laquelle la surface de fond (2) comprend un panneau interne (21) et un châssis (22) accouplé au panneau (21), dans laquelle le châssis (22) est équipé desdits premiers moyens (221).

3. Plate-forme (1) selon au moins l'une des revendications précédentes, dans laquelle au moins la surface de fond (2) et les cloisons latérales (3, 4) sont fabriquées en aluminium et/ou avec un produit consistant en aluminium et en un matériau qui est au maximum lourd comme l'aluminium.

4. Plate-forme (1) selon la revendication précédente, dans laquelle au moins la surface de fond (2) inclut une couche d'aluminium alvéolaire.

5. Plate-forme (1) selon la revendication 3 ou la revendication 4, dans laquelle au moins la surface de fond (2) comprend une couche (25) fabriquée en polymère alvéolaire.

6. Plate-forme (1) selon les revendications 3 à 5, dans laquelle au moins la surface de fond (2) inclut un panneau sandwich (21) comprenant deux plaques en aluminium (23, 24) entre lesquelles est interposée ladite couche (25).

7. Plate-forme (1) selon la revendication précédente et la revendication 2, dans laquelle ledit châssis (22) est logé dans une cavité périphérique formée par l'une desdites plaques en aluminium (24) du panneau (21).

8. Plate-forme (1) selon au moins l'une des revendications 3 à 7, comprenant une pluralité de profilés adaptés à s'encastrer deux par deux, formant ainsi ladite surface de fond.

9. Plate-forme (1) selon au moins l'une des revendications 2 à 8, comprenant au moins une cloison latérale pleine (4) obtenue comme la surface de fond (2).

10. Plate-forme (1) selon l'une quelconque des revendications précédentes, dans laquelle lesdits troisièmes moyens comprennent une pluralité d'éléments angulaires (34), adaptés chacun à raccorder des extrémités respectives de deux profilés (33) disposés transversalement dans la cloison latérale respective (3), chaque élément angulaire comprenant au moins deux membres de raccordement (341, 342) adaptés à s'insérer à encastrement dans des profilés respectifs.

11. Plate-forme (1) selon la revendication 1, dans laquelle lesdits troisièmes moyens comprennent une pluralité d'éléments centraux (35), chacun pouvant être fixé d'une façon amovible au premier profilé (33) et comprenant au moins un membre de raccordement (351) adapté à s'insérer, à encastrement, dans l'extrémité d'un second profilé (33), disposé transversalement au premier profilé.

12. Structure de chargement comprenant une plate-forme (1) selon au moins l'une des revendications précédentes et un dispositif d'accouplement (6) étant fixé d'une façon amovible à la plate-forme (1), dont le dispositif d'accouplement (6) peut se raccorder directement au bras d'un manipulateur télescopique ou de machines similaires.
